# EUROPEAN PATENT SPECIFICATION

(11) **EP 0 263 685 B1**
(45) Date of publication and mention of the grant of the patent: **18.08.1993**
(21) Application number: 87308864.5
(22) Date of filing: 06.10.1987
(51) Int. Cl.: G11B 13/04

(54) **Extra magnetic field positioning apparatus**
Zusätzliches Magnetfeld-Postionierungsgerät
Appareil de positionnement de champ magnétique supplémentaire

(30) Priority: 06.10.1986 JP 237385/86
(43) Date of publication of application: 13.04.1988
(73) Proprietor: SHARP KABUSHIKI KAISHA, Osaka 545 (JP)
(72) Inventor: Minami, Higashi, Kaizuka-shi, Osaka-fu (JP); Hyuga, Takao, Kizu-cho, Soraku-gun,Kyoto-fu (JP); Deguchi, Toshihisa, Daiwa-cho,Gakuen,Nara-shi,Nara-ken (JP); Nomura, Masaru, Tenri-shi, Nara-ken (JP)
(74) Representative: Brown, Kenneth Richard

(56) References cited:
- EP-A- 0 105 033
- DE-A- 2 813 855
- FR-A- 2 049 349
- PATENT ABSTRACTS OF JAPAN,vol. 8, no. 157 (P-288)(1594)20 July 1984;& JP-A-5954003
- PATENT ABSTRACTS OF JAPAN,vol. 5, no. 201 (P-94)(873)19 December 1981;& JP-A-56121108

## Description

The present invention relates to an extra magnetic field positioning apparatus for an optical magnetic disk apparatus.

A stepping motor constructed to have several inherently stable rotational positions of the motor itself has sometimes been used in the prior art as a drive motor for an extra magnetic field positioning apparatus in optical magnetic disk apparatus. An extra magnetic field positioning apparatus using such a stepping motor achieves positioning of said extra magnetic field by stopping the stepping motor at its stable rotational positions.

However, since the damping factor of the stepping motor used for this driving is poor, a longer setting time is required for positioning and positioning accuracy is decreased because of fluctuation in the magnetic field of said stepping motor at the respective stable rotational positions. Moreover, it is very difficult to stop the stepping motor at a desired angle intermediate said stable rotational positions because said stable positions of the stepping motor are set and are equally spaced.

FR 2049349 describes a rotary device which has a disk rotated by a motor, the motor being driven by a voltage which is to be measured, so that the amount by which the disk rotates is representative of that voltage. As the disk returns to its original position a series of holes in its surface is counted.

The present invention aims to provide rotary positioning apparatus which has simplified structure, assures high speed operation with high accuracy and eliminates positioning error.

Accordingly, the present invention provides an extra magnetic field positioning device in which an electric motor is coupled to a member to position said member at any one of a plurality of different rotational positions and in which rotary position encoder means is arranged to provide signals in accordance with the rotational position of the motor shaft to be employed in a positioning operation, wherein the motor is designed to rotate continuously when a DC voltage is applied to said motor and said rotary position encoder means comprises first means for detecting the angular displacement of the motor shaft from a start position during movement towards a target rotational position, and second means operating to detect the arrival of the motor shaft at said target position and whether the motor shaft stably stops at said target position, characterised in that control means is provided disabling said second means during movement towards said target position, said control means being responsive to the output of said first means to establish a timing for re-enabling said second means just before the target position is reached.

When such a DC motor which has no inherently stable points, is rotated as the driving source of extra magnetic field positioning apparatus in order to change extra magnetic field, the encoder coupled to said motor also rotates and information indicating the rotational position of the rotating encoder is derived by the sensors. Thus information is input, for example, to a feedback circuit and the extra magnetic field can be positioned at a high speed with high accuracy.

In order that the present invention may be more fully understood a detailed description will be given of an embodiment thereof, by way of example, and with reference to the accompanying drawings wherein:
Fig. 1 is an outline diagram of the structure of an extra magnetic field positioning device according to the invention;
Fig. 2 indicates a positional relationship between the encoder and photosensors; and
Fig. 3 is a detailed view of an essential part of the extra magnetic field positioning device of Figure 1.

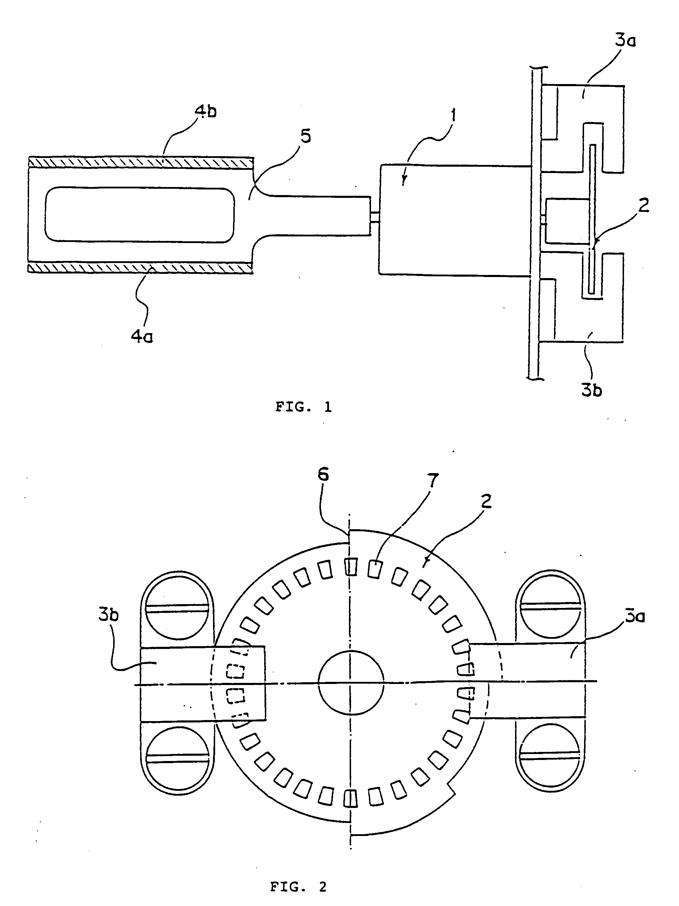

In Fig. 1, 1 is a drive motor for extra magnetic field positioning apparatus in an optical magnetic disk apparatus; 2 is an encoder which is fixed to the rotating shaft of said drive motor and rotates; 3a, 3b are photosensors. Positioning of said drive motor 1 can be made by feeding the displacement information of said drive motor obtained from said encoder 2 and photosensors 3a, 3b back to the motor 1. Here, as said drive motor 1, a DC motor which does not have stepping motor construction and hence has no inherently stable rotational positions is used. 4a, 4b are permanent magnets having opposite polarities. These two sheets of permanent magnets 4a, 4b are respectively arranged on the reverse sides of the rotating shaft of a holder 5 in such a way that they have opposite polarities owing to the holding member. The rotating shaft of holder 5 providing said permanent magnets 4a, 4b is fixed to the shaft of said drive motor 1 and when said motor 1 rotates by 180°, the permanent magnets 4a, 4b having opposite polarities are located inversely, thereby changing the polarity of the extra magnetic field.

Fig. 2 is a more detailed view indicating positional relationship between said encoder 2 and photosensors 3a, 3b. Said photosensors 3a, 3b both project towards the centre of rotation of encoder 2 at both sides of the disk of rotating encoder 2 (Fig. 1). A light emitting part is provided on the projecting part on one side of the encoder 2 and emits light towards the corresponding part of encoder 2. This light is then received by the light receiving part of the photosensor provided at the other side of the encoder 2. Thereby, positional information of said encoder 2 is derived from detection of the reflected light. The information recorded on the encoder 2 for said photosensors 3a, 3b to detect is composed of a stepped part 6 at the external circumference of encoder 2 which indicates the rotating displacement of said DC motor 1 for the photosensor 3a and window portions 7 provided with equal spacing around the circumference of encoder 2. These indicate the rotating position of DC motor 1 for the photosensor 3b. These photosensors 3a, 3b are symmetrically provided on either side of the centre of encoder 2 and can operate simultaneously to determine the position of the encoder 2.

The extra magnetic field positioning apparatus of the structure described above determines the stop position and rotating position of said DC motor 1 using the stepped portion 6 at the circumference of said encoder which is equivalent to a stable position at which the DC motor 1 stops.

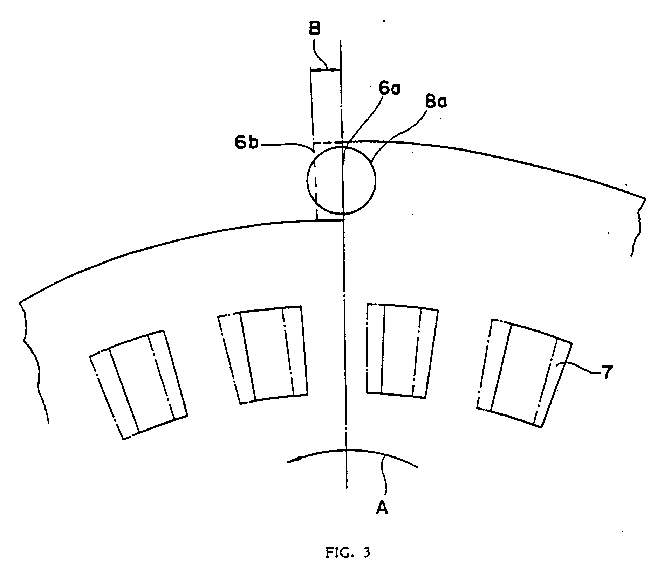

Stop position is determined as explained below. Fig. 3 indicates the detecting range 8a of the photosensor 3a which detects the stepped portion 6 at the external circumference of said encoder 2. In this Figure, when the stepped portion 6 at the external circumference of said encoder enters the detecting range 8a of the photosensor 3a, the stop position of DC motor 1 is determined to have been reached. The encoder 2 rotates thereafter a little in the direction of arrow A due to disturbance up to the position indicated by the dotted line. The stepped portion 6a of the encoder 2 in the detecting range 8a of the photosensor 3a will rotate only by angle B and reaches the position 6b. In this case, when the area closing said detecting range 8a increases, the output level of the photosensor 3a falls a little from the initial value. The DC motor 1 then rotates in a direction reverse to that of arrow A, namely in the direction which suppresses fluctuation by said disturbance so that the encoder 2 returns to its initial condition 6a. If displacement in the reverse direction is generated by the disturbance, the output level of the photosensor 3a rises a little from its initial value, and the DC motor 1 therefore again rotates in such a direction as to suppress fluctuation by disturbance, and returns to the initial condition 6a. The encoder 2 therefore stops stably at the stop position.

As explained above, a stable position can be provided to a DC motor 1 which does not have inherently stable rotational positions and said stable positions will absorb small disturbances. Therefore, very accurate positioning can be realised. In addition, the DC motor 1 coupled to the encoder 2 can be stopped at a desired position simply by changing the position of the stepped portion 6 of encoder 2. Simultaneously the servo pulling region can be widened and positioning error can be eliminated by limiting such stop points to only the required positions.

As explained below the approach to a target rotational position can be determined as well. For example, if it is required to displace the position of magnets 4a, 4b by 90°, it is sufficient for the stepped portion 6 at the external circumference of encoder 2 to be rotated up to the position of said photosensor 3a in Fig. 2. However, when the DC motor 1 is rotated continuously, the encoder 2 also tries to rotate, positioning operation will be effected in the manner explained above and thereby the DC motor 1 will stop at detection of stepped portion 6 and can no longer be rotated. Therefore, in cases when the encoder is to move from one stable position to another (namely, the stepped portion 6 of the external circumference of the encoder 2), the feedback circuit to the DC motor 1 from the encoder 2 is cut to allow the DC motor 1 to rotate. When the encoder 2 has almost completed rotation up to the target angle said feedback circuit is connected again at an adequate position just before the stepped portion 6 of the external circumference of encoder 2 enters the detecting range 8a of said photosensor 3a. The positioning operation then works again so that the stepped portion 6 of external circumference enters the detecting range 8a and the encoder 2, and the DC motor 1 will stop at the target position.

In this case, the timing of reconnecting said feedback circuit is determined by counting number of window portions 7 having passed detector 3b. The current position of the encoder 2 can always be determined by counting the total number of ON signals generated when the window portions, equally spaced in the circumferential direction of the encoder 2, pass the photosensor 3b provided to detect them. Therefore, the timing for connecting said feedback circuit can be taken by counting the number of window portions 7 using the photosensor 3b during the period from the start of rotation of the DC motor 1 until immediately before the stepped portion of external circumference 6 of said encoder enters the detecting range 8a. In this case, since the photosensors 3a and 3b are symmetrically provided to the rotation centre, the stepped portion 6 of the external circumference of encoder 2 which is the signal for the photosensor 3a must be located opposite the window portion 7 on the circumference which is the signal for the photosensor 3b in the same timing. This operation allows setting to be done quickly and thereby high speed rotation and high speed setting can also be realised by providing sufficient gain for said feedback operation.

Only certain embodiments of the present invention have been described.

## Claims

1. An extra magnetic field positioning device in which an electric motor (1) is coupled to a member (5, 4a, 4b) to position said member at any one of a plurality of different rotational positions and in which rotary position encoder means (2, 3a, 3b) is arranged to provide signals in accordance with the rotational position of the motor shaft to be employed in a positioning operation, wherein the motor is designed to rotate continuously when a DC voltage is applied to said motor and said rotary position encoder means comprises first means (7, 3b) for detecting the angular displacement of the motor shaft from a start position during movement towards a target rotational position, and second means (6, 3a) operating to detect the arrival of the motor shaft at said target position and whether the motor shaft stably stops at said target position, characterised in that control means is provided disabling said second means (6, 3a) during movement towards said target position, said control means being responsive to the output of said first means (7, 3b) to establish a timing for re-enabling said second means (6, 3a) just before the target position is reached.

2. An extra magnetic field positioning device according to claim 1 characterised by a coded element (2) coupled to rotate with the motor shaft, said coded element including an array of regularly circumferentially spaced detectable first datums (7) co-operable with a first datum detector (3b) to constitute said first means, and said coded element including a plurality of detectable second datums spaced circumferentially according to the spacing of said different rotational positions and co-operable with a second datum detector (3b) to constitute said second means.

3. An extra magnetic field positioning device according to claim 2 wherein said coded element is a disk mounted on the motor shaft, said first datums comprise a ring of windows formed in said disc, and said second datums comprises circumferential discontinuities (6) at the outer edge of said disk (2).

## Patentansprüche

1. Zusatz-Magnetfeld-Positionierungsgerät, bei welchem ein Elektromotor (1) mit einem Element (5, 4a, 4b) gekoppelt ist, um dieses Element an einer aus einer Vielzahl verschiedener Rotationsstellungen zu positionieren und bei welchem ein Rotationspositions-Kodiermittel (2, 3a, 3b) so angeordnet ist, daß es Signale in Übereinstimmung mit der Rotationsposition der bei einer Positionierungsoperation zu verwendenden Motorwelle liefert, wobei der Motor so konstruiert ist, daß er sich kontinuierlich dreht, wenn eine Gleichspannung an den Motor angelegt wird und das Rotations-Positions-Kodiermittel ein erstes Mittel (7, 3b) für das Feststellen der Winkelverschiebung der Motorwelle gegenüber einer Ausgangsstellung während einer Bewegung in Richtung auf eine Ziel-Rotationsstellung hin und ein zweites Mittel (6, 3a) umfaßt, das funktioniert, um die Ankunft der Motorwelle an dieser Zielstellung festzustellen und um zu überprüfen, ob die Motorwelle stabil an dieser Zielstellung zum Stillstand kommt, **dadurch gekennzeichnet,** daß ein Steuermittel vorgesehen ist, das das zweite Mittel (6, 3a) während der Bewegung in Richtung auf die Zielstellung hin außer Funktion setzt, wobei dieses Steuermittel auf den Ausgang aus dem ersten Mittel (7, 3b) anspricht, um einen Zeitpunkt festzulegen, um das zweite Mittel 6, 3a) unmittelbar bevor die Zielposition erreicht ist, wieder in Funktion zu setzen.

2. Zusatz-Magnetfeld-Positionierungsgerät nach Anspruch 1, **gekennzeichnet durch** ein kodiertes Element (2), das gekoppelt ist, um sich mit der Motorwelle zu drehen, wobei dieses kodierte Element eine Reihe von regelmäßig über den Umfang in einem Abstand voneinander angeordnete feststellbare erste Daten (7) einschließt, die mit einer ersten Datenfeststelleinrichtung (3b) zusammenarbeiten, um das erste Mittel zu bilden und wobei das kodierte Element eine Vielzahl feststellbarer Daten einschließt, die über den Umfang in einem gewissen Abstand voneinander entsprechend dem Abstand der verschiedenen Rotationspositionen angeordnet sind und mit einer zweiten Datenfeststelleinrichtung (3b) zusammenarbeiten, um das zweite Mittel zu bilden.

3. Zusatz-Magnetfeld-Positionierungsgerät nach Anspruch 2, bei welchem das kodierte Element eine Scheibe ist, die an der Motorwelle montiert ist, wobei die ersten Daten einen Fensterring umfassen, der in der Scheibe ausgebildet ist und wobei die zweiten Daten Unstetigkeiten des Umfangs (6) am äußeren Rand der Scheibe (2) umfassen.

## Revendications

1. Un dispositif de positionnement de champ magnétique additionnel dans lequel un moteur électrique (1) est accouplé à un organe (5, 4a, 4b) afin de positionner ledit organe à une position quelconque parmi une série de positions différentes de rotation et dans lequel un moyen encodeur rotatif de position (2, 3a, 3b) est agencé pour envoyer, en fonction de la position de rotation du moteur, des signaux à employer dans une opération de positionnement, le moteur étant prévu pour tourner en continu lorsqu'une tension en courant continu est appliquée audit moteur et ledit moyen encodeur rotatif de position comprenant un premier moyen (7, 3b) de détection du déplacement angulaire de l'arbre du moteur depuis une position d'origine pendant le mouvement vers une position de rotation cible, et un deuxième moyen (6, 3a) agissant pour détecter l'arrivée de l'arbre du moteur à ladite position cible et pour détecter si l'arbre du moteur s'arrête de façon stable à ladite position cible, caractérisé en ce qu'il est prévu un moyen de commande invalidant ledit deuxième moyen (6, 3a) pendant le mouvement vers ladite position cible, ledit moyen de commande étant sensible à la sortie dudit premier moyen (7, 3b) pour établir un instant de revalidation dudit deuxième moyen (6, 3a) immédiatement avant que la position cible ne soit atteinte.

2. Un dispositif de positionnement de champ magnétique additionnel selon la revendication 1 caractérisé par un élément codé (2) accouplé de façon à tourner avec l'arbre du moteur, ledit élément codé incluant un réseau de premières données (7) détectables espacées régulièrement circonférentiellement, pouvant coopérer avec un premier détecteur (3b) de données pour constituer ledit premier moyen, et ledit élément codé incluant une série de deuxièmes données détectables espacées circonférentiellement selon l'espacement desdites positions différentes de rotation et pouvant coopérer avec un deuxième détecteur (3b) de données pour constituer ledit deuxième moyen.

3. Un dispositif de positionnement de champ magnétique additionnel selon la revendication 2 dans lequel ledit élément codé est un disque monté sur l'arbre du moteur, lesdites premières données comprennent un anneau de fenêtre ménagées dans ledit disque, et lesdites deuxièmes données comprennent des discontinuités circonférentielles (6) au bord extérieur dudit disque (2).
